# EUROPEAN PATENT APPLICATION

(11) **EP 2 789 887 A1**
(43) Date of publication of application: **15.10.2014**
(21) Application number: 14164407.0
(22) Date of filing: 11.04.2014
(51) Int. Cl.: F16K 31/122

(54) **Stream switching system**

(30) Priority: 12.04.2013 US 201361811417 P
(71) Applicant: PARKER HANNIFIN CORPORATION, Cleveland, OH 44124-4141 (US)
(72) Inventor: Reid, Kenneth E, Oxford, AL Alabama 35203 (US); Ruiz, Frank, Greenwell Springs, LA Louisiana 70739 (US); Burke, James Adam, Southside, AL Alabama 35907 (US)
(74) Representative: Belcher, Simon James

(57) **Abstract**

A valve module for a stream selector includes first and second pistons (170,59) which are axially movable against a biasing force by fluid from an actuation passage acting on undersides of the respective pistons (170,59) to move a valve head (93) from a closed position to an open position where fluid flows from an inlet passage (51,52) into a control chamber portion (50) to an outlet passage (53,54). The stream selector operates at advantageously low actuation air pressures, while providing a valve module that is backwards compatible.

## Description

The present invention relates generally to stream selectors for process analysers.

Stream selectors for process analysers control the flow of fluid into the analyser. The selector selects a single sample stream from multiple flow streams to pass on for analysis. This reduces the cost of analysing multiple gas and liquid process streams in, e.g., a manufacturing or laboratory facility, as each analyser is relatively expensive. The stream selector includes a series of valves which are typically electrically controlled. It is conventional practice to use a common outlet header connected to each valve to route the selected sample stream to the analyser. It is important that only one sample is routed through the header to the analyser at one time.

Factors in analysing process streams are (i) cross-contamination of samples, (ii) the size of the analyser and associated components, and (iii) the ease of installation, maintenance and repair of the analyser. Cross-contamination of samples can be caused by leaking valves and/or dead volume (e.g., irregular passageways, large internal volumes, etc.) allowing contamination from previous samples.

The invention provides a valve module for a stream selector, the valve module including a module body having an inlet passage, an outlet passage, a vent passage, an actuation passage, and a valve receiving cavity defining a control chamber portion in communication with the inlet and outlet passages, a vent chamber portion in communication with the vent passage, and an actuation chamber portion in communication with the actuation passage, and a valve assembly received in the valve receiving cavity of the module body. The valve assembly includes a first valve body having a first piston receiving cavity and a bore extending to the first piston receiving cavity, a first piston having a base portion movably received in the first piston receiving cavity and a rod portion, a poppet valve having a valve head received in the control chamber portion for sealing the inlet passage and a stem extending through the bore in the first valve body to a fixed connection with the first piston, a second valve body having a second piston receiving cavity and a bore extending to the second piston receiving cavity, in which the rod portion of the first piston extends through the said bore, a second piston movably received in the second piston receiving cavity, the second piston having a fixed connection with the rod portion of the first piston, and a resilient member providing a biassing force that urges the poppet valve to a closed position where the valve head seals the inlet passage. The first and second pistons are axially movable against the biassing force by fluid from the actuation passage acting on undersides of the respective pistons to move the valve head from the closed position to an open position where fluid flows from the inlet passage into the control chamber portion to the outlet passage.

The stream switching system enables a system, such as the system described in US-6619321, to operate at significantly lower actuation air pressures. The improved stream switching system can allow actuation air pressures to be reduced by approximately one half while still allowing the same functionality as the system disclosed in US-6619321. Additionally, the improved stream switching system is backwards compatible with the system disclosed in US-6619321.

Optionally, the first piston has a piston passage that communicates with a chamber defined between the underside of the second piston and the second valve body, in which the piston passage is configured to deliver fluid from an actuation chamber defined between the underside of the first piston and the first valve body in the actuation chamber portion to the chamber in the second valve assembly.

Optionally, the first piston includes one or more radial passages that receive the fluid from the piston passage and that deliver the fluid to the chamber between the underside of the second piston and the second valve body.

Optionally, the first valve body includes one or more radial passages that fluidly connect the actuation passage to the actuation chamber.

Optionally, the valve body is received in the actuation chamber portion of the valve receiving cavity.

Optionally, the valve module further includes a bonnet received in the vent chamber portion of the valve receiving cavity, the bonnet including a bore fluidly connected to the vent passage, and in which the stem of the poppet valve extends through the bore.

Optionally, the bonnet includes one or more radial passages that fluidly connect the vent passage and the control cavity portion.

Optionally, the module body defines a first valve seat for the valve head when the poppet is in the closed position and an end of the bore defines a second valve seat for the valve head of the poppet when the poppet is in the open position.

Optionally, the poppet valve includes first and second resilient valve sealing members configured to be seated against the first and second valve seats, respectively.

Optionally, the first and second pistons are axially aligned.

Optionally, the vent chamber portion is located between the control chamber portion and the actuation chamber portion.

Optionally, the module body has a side passage, the valve receiving cavity defines a spacer chamber portion in communication with the side passage, and the spacer chamber portion is located between the vent chamber portion and the actuation chamber portion.

Optionally, the valve module includes a spacer body received in the spacer chamber portion, the spacer body includes a bore extending through the body, and the stem of the poppet valve extends through the bore.

Optionally, the spacer body includes one or more radial passages connected to the side passage.

Optionally, the second valve body includes one or more radial passages for allowing air in the actuation cavity portion between a topside of the first piston and a bottom of the second valve body to be vented.

Optionally, the second valve body includes a passage defined by an annular groove, and one or more radial passages extending outward from the groove to allow fluid in the actuation cavity portion between a topside of the first piston and a bottom of the second valve body to be vented to atmosphere.

Optionally, the valve module includes a cover, the resilient member being located between a base of the second piston and the cover to urge the second piston downward to urge the poppet valve to the closed position.

Optionally, the cover includes an opening that, with an outer surface of the second piston, defines a passage to allow fluid in the second piston receiving cavity between a topside of the second piston and the cover to be vented to atmosphere.

Optionally, the module body has a second inlet passage, a second outlet passage, a second vent passage, and a second valve receiving cavity defining a second control chamber portion in communication with the second inlet and second outlet passages, a second vent chamber portion in communication with the second vent passage, and a second actuation chamber portion in communication with the actuation passage, in which the second inlet passage is in communication with the first outlet passage.

Optionally, the valve module further includes a second valve assembly received in the second valve receiving cavity of the module body, the second valve assembly including a third valve body having a third piston receiving cavity and a bore extending to the third piston receiving cavity, a third piston having a base portion movably received in the third piston receiving cavity and a rod portion, a second poppet valve having a valve head received in the second control chamber portion for sealing the second inlet passage and a stem extending through the bore in the third valve body to a fixed connection with the third piston, a fourth valve body having a fourth piston receiving cavity and a bore extending to the fourth piston receiving cavity, which bore has extending there through the rod portion of the third piston, a fourth piston movably received in the fourth piston receiving cavity, the fourth piston having a fixed connection with the rod portion of the third piston, and a second resilient member providing a biassing force that urges the second poppet valve to a closed position where the valve head seals the second inlet passage, in which the third and fourth pistons are axially movable against the biassing force by fluid from the actuation passage acting on undersides of the respective pistons to move the valve head from the closed position to an open position where fluid flows from the second inlet passage into the second control chamber portion to the second outlet passage.

The invention also provides a valve module for a stream selector, the valve module including a module body having an inlet passage, an outlet passage, an actuation passage, and a valve receiving cavity in communication with the inlet, outlet, and actuation passages, and a valve assembly received in the valve receiving cavity of the module body, the valve assembly including a first valve body having a first piston receiving cavity, a first piston received in the piston receiving cavity, a poppet valve having a valve head for sealing the inlet passage and a stem coupled to the first piston, a second valve body having a second piston receiving cavity and a bore extending to the second piston receiving cavity through which the first piston extends, and a second piston received in the second piston receiving cavity and being coupled to the first piston, in which the first and second pistons are axially movable against a biassing force by fluid from the actuation passage acting on undersides of the respective pistons to move the poppet valve from a closed position where the valve head seals the inlet passage to an open position where fluid flows from the inlet passage to the outlet passage.

The invention also provides a method of assembling a valve module having first and second configurations operable at relatively high and relatively low actuation pressures, respectively. The valve module in the first configuration has a first piston responsive to the relatively high actuation pressure for effecting closing and opening of a poppet coupled to the piston, and a first valve body for receiving the first piston. The valve module in the second configuration has a second valve body and a second piston connected in tandem with the first piston. The first and second pistons are response to the relatively low actuation pressure for effecting closing and opening of the poppet, and the first valve body receives the second piston and the second valve body receives the first piston.

The invention is described below by way of example with reference to the accompanying drawings, in which:
Fig. 1 is a cross-sectional side view of a prior art stream selector.
Fig. 2 is an exploded view of the stream selector of Fig. 1.
Fig. 3 is a cross-sectional view of a stream selector according to the invention.
Fig. 4 is an exploded view of the stream selector of Fig. 3.
Fig. 5 is a cross-sectional view of another stream selector according to the invention.
Fig. 6 is an exploded view of the stream selector of Fig. 5.

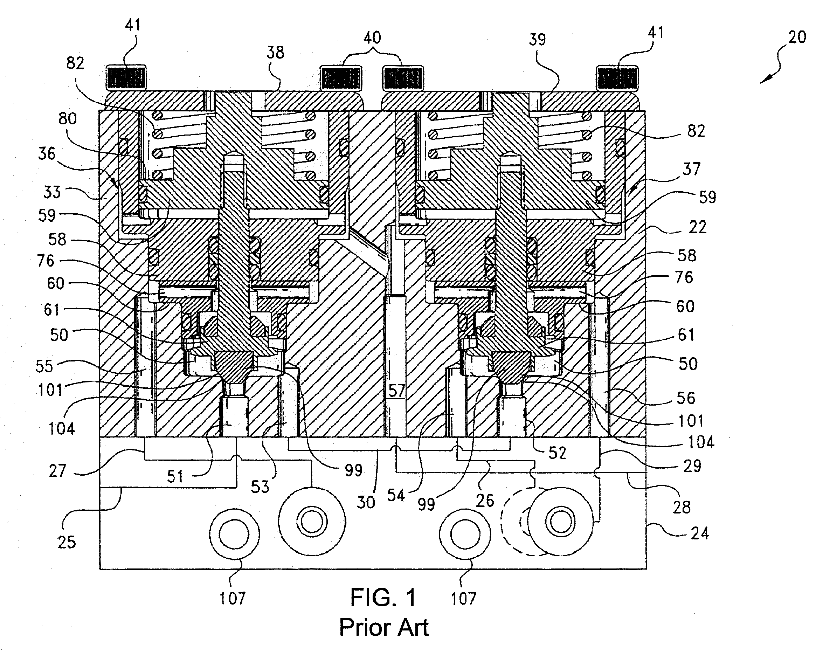

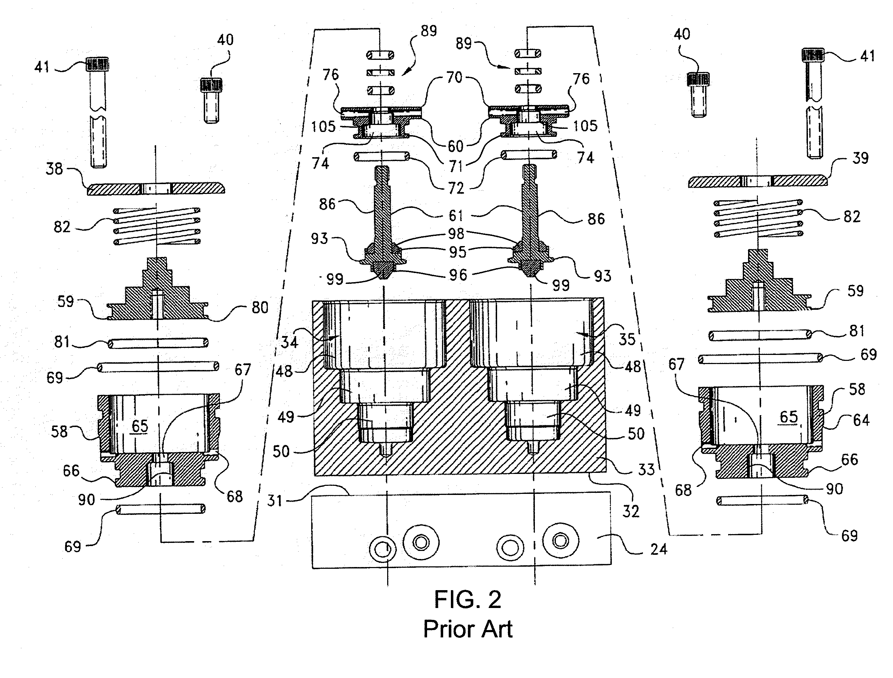

Referring to the drawings, Figs. 1 and 2 show a stream selector 20 for a stream switching system as described in US-6619321. The stream selector 20 includes a valve module 22 removably attachable to a base plate 24. The base plate 24 includes an inlet passage 25, an outlet passage 26, a first vent passage 27, an actuation passage 28, a second vent passage 29, and a common connection passage or channel 30. The passages 25, 26, 27, 28, 29 all have one end that opens to a top flat surface 31 of the base plate adjacent the valve module. Common passage 30 is open along the length of the passage. Appropriate O-ring seals are provided in grooves in the top flat surface 31 of the base plate surrounding the openings to provide a fluid-tight seal with a lower flat surface 32 of the valve module. Horizontal through-bores 107 are provided through the base plate 24 to facilitate the securing of the modules adjacent one another.

The passages 25, 26, 27, 28, 29 all have other ends that open along the end and side surfaces of the base plate. For example, the inlet passage 25 opens to one end of the base plate, the actuation passage 28 opens to the opposite end of the base plate, the first vent passage 27 opens along both sides of the base plate, the second vent passage 29 opens to one side of the base plate, and the outlet passage 26 opens to the other side of the base plate, preferably at approximately the same location (but on the opposite side) as second vent passage 29. Of course, this is only one example of the flow paths through the base plate, and the passages could have other configurations depending upon the particular application.

Each module includes a module body 33 having a pair of valve receiving cavities 34, 35. A valve assembly is received in each valve cavity. That is, valve assembly 36 is received in valve cavity 34, while valve assembly 37 is received in valve cavity 35. Covers 38, 39 are provided to enclose each valve assembly 36, 37, respectively, in a valve cavity. Threaded bolts 40 extend partway into the module body 33 to connect the covers 38, 39 to the module body, while threaded bolts 41 are longer and extend entirely through the module body 33 to the base plate 24 to removably connect the module to the base plate. With the module so connected, the lower flat surface 31 of the module in adjacent, surface-to-surface relation to the upper flat surface 32 of the base plate. While not shown, other appropriate means (clamps, etc.) could alternatively or additionally be used to removably attach the module to the base plate, as should be appreciated by those of ordinary skill in the art.

Each valve receiving cavity 34, 35 is preferably identical, and includes an enlarged actuation cavity portion 48, a slightly (radially) smaller vent cavity portion 49, and a still slightly (radially) smaller control cavity portion 50, with the vent cavity portion 49 located between the actuation cavity portion 48 and the control cavity portion 50. Inlet passages 51, 52 are provided through module body 33 from the lower flat surface directly into the central portion of the control chamber portion 50 for each valve receiving cavity. Inlet passage 51 for valve assembly 36 is fluidly aligned and connected to inlet passage 25 in base plate 24, while inlet passage 52 for valve assembly 37 is fluidly aligned with one end of common passage 30. Outlet passages 53, 54 are similarly provided from the lower surface 32 into the side of each control chamber portion of each valve receiving cavity. Outlet passage 53 for valve assembly 36 is fluidly aligned with the other end of common passage 30, while outlet passage 54 for valve assembly 37 is fluidly aligned with outlet passage 26 in base plate 24. Common passage 30 directly fluidly connects the outlet passage 53 of valve assembly 36 with the inlet passage 52 of valve assembly 37.

Vent passages 55, 56 are similarly provided into the side of the vent cavity portion 49 of each valve receiving cavity. Vent passage 55 for valve assembly 36 is fluidly aligned with first vent passage 27 in the base plate 24, while vent passage 56 for valve assembly 37 is fluidly aligned with second vent passage 29 in base plate 24.

A common actuation passage 57 is provided for both valve assemblies, and extends from the actuation chamber 48 of each valve receiving cavity 34, 35, where it is fluidly aligned with the actuation passage 28 in the base plate 24.

The valve assemblies are also preferably identical for ease of manufacture and assembly, although, of course, this could also be different. Each includes a valve body 58, a piston 59 moveably disposed in the valve body, a valve bonnet 60 and a valve poppet 61. The valve body 58 includes a cylindrical wall portion 64 defining a central piston receiving cavity 65. The cylindrical wall portion 64 is closely received in the actuation cavity portion 48. The valve body 58 further includes a cylindrical base portion 66 which is closely received in the vent cavity portion 49. The base portion 66 includes a central through-bore 67, and one or more radial passages 68 at the junction between the wall portion 64 and the base portion 66, all opening into piston receiving cavity 65. Appropriate O-ring seals 69 are provided in grooves in valve body 58 to provide a fluid-tight seal between valve body 58 and the module body 33.

Valve bonnet 60 has a cylindrical body portion 70 received in vent cavity portion 49, and a cylindrical base portion 71 closely received in control cavity portion 50. Covers 38 and 39 retain the valve bonnet 60 and valve body 58 securely in each valve receiving cavity, such that these components are fixed relative to the module body 33. An O-ring seal 72 is received in a groove in the valve bonnet 60 and provides a fluid-tight seal between the bonnet 60 and the module body 33. Bonnet 60 also includes a central through-bore 74, and one or more radial passages 76 which fluidly connect with the through-bore.

The piston 59 has a cylindrical base 80 closely received in the piston receiving cavity 65 of the valve body 58. The piston 59 is allowed to move axially within the piston receiving cavity 65, and includes a groove receiving an O-ring seal 81 for providing a fluid-tight seal between the piston 59 and the valve body 58.

The upper surface of the base 80 provides a spring stop for a compression spring 82. As best shown in Fig. 1, the compression spring 82 is located between the cylindrical base 80 and a respective cover 38, 39 and normally urges the piston 59 downwardly toward the base 66 of the valve body 58.

Referring also to Fig. 2, the poppet valve 61 has an elongated cylindrical stem 86 which extends through the passage 74 in the valve bonnet 60 and through the bore 67 in the valve body 58. The stem extends upwardly to a threaded connection with the piston 59, and as such, the piston and poppet valve move axially in conjunction with one another. A series of O-rings 89 or other packing is provided in a counterbore 90 in the bore 67 of the valve body 58 to provide a fluid-tight seal between the stem 86 of the poppet valve and the valve body 58.

The poppet valve 61 further has a valve head 93 at the lower end of the valve stem. The valve head is located in the control cavity portion 50 of the valve receiving cavity. An annular sleeve 95 extends outwardly away from one (upper or rear) surface of the valve head 93 toward the valve bonnet 60, while a similar annular sleeve 96 extends outwardly (downwardly) away from the opposite (lower or front) surface of the valve head 93 toward the inlet passages 51, 52, respectively. Sleeves 95, 96 define seal holders.

An upper or rear plug seal 98 is received in upper/rear seal holder 95, while a lower or front plug seal 99 is received in lower/front seal holder 96. Plug seal 98 has an annular configuration and is closely received around stem 86 and is received in any suitable manner, such as by crimping or with a friction fit, in seal holder 95. Plug seal 99 has a solid cylindrical configuration and is closely received in any suitable manner, such as by crimping or with a friction fit, in seal holder 96. Seal holders 95, 96 can be crimped to facilitate retaining the plug seals 98, 99, respectively. Each plug seal 98, 99 has an outwardly-facing tapered surface, respectively, and is designed to sit squarely against a valve seat. Specifically, when the module is in a non-actuated condition (as shown in, e.g., Fig. 1), the tapered surface 101 of lower seal 99 sits squarely against a valve seat 104 defined at the upper/inner end of inlet passage 51, 52, respectively, and provides a fluid-tight seal therewith. Likewise, when the module is in an actuated condition, the tapered surface of the upper seal 98 sits squarely against a valve seat 105 defined at the lower/inner end of through-bore 74 in valve bonnet 60, and provides a fluid-tight seal therewith.

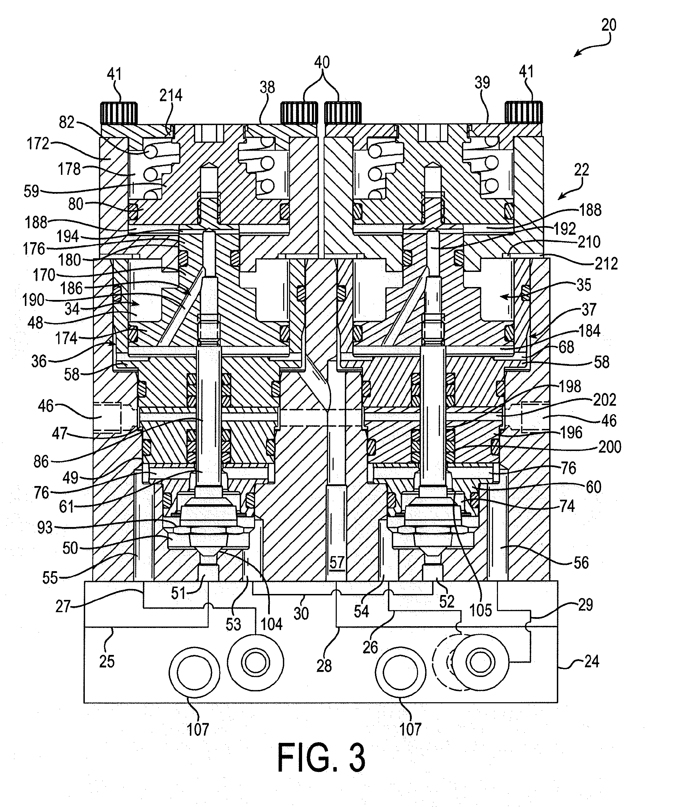

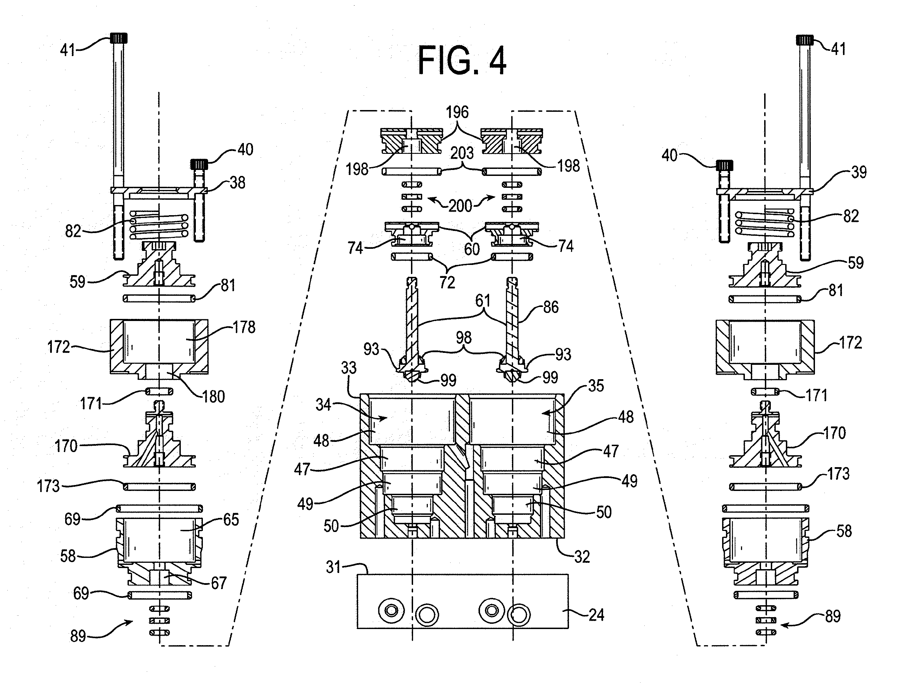

Turning now to Figs. 3 and 4, the exemplary stream selector 20 is substantially the same as the above-referenced stream selector 20 except as noted below, and consequently, the same reference numerals are used to denote structures corresponding to similar structures in the stream switching modules.

Referring to Figs. 3 and 4 in detail, the valve module 22 includes a module body 33 having a pair of valve receiving cavities 34, 35, which may be identical, and valve assemblies 36 and 37 received in the cavities 34 and 35, respectively. The module body 33 has inlet passages 51, 52, outlet passages 53, 54, vent passages 55, 56 and a common actuation passage 57. The valve receiving cavity 34 defines a control chamber portion 50 in communication with the inlet and outlet passages 51 and 53, a spacer chamber portion 47 in communication with a side vent passage 46, a vent chamber portion 49 in communication with the vent passages 55, and an actuation chamber portion 48 in communication with the actuation passage 57. The spacer chamber portion 47 is located between the vent chamber portion 49 and the actuation chamber portion 48. The valve receiving cavity 35 similarly defines a control chamber portion 50 in communication with the inlet and outlet passages 52 and 54, a spacer chamber portion 47 in communication with the side vent passage 46, a vent chamber portion 49 in communication with the vent passage 56, and an actuation chamber portion 48 in communication with the actuation passage 57.

The valve assemblies 36 and 37 each include a first valve body 58, a first piston 170, a poppet valve 61, a second valve body 172, a second piston 59, and a resilient member 82. The first valve body 58 has a first piston receiving cavity 65 and a bore 67 extending to the first piston receiving cavity 65, and the first piston 170 has a base portion 174 movably received in the first piston receiving cavity 65 and a rod portion 176. Piston 170 includes a groove receiving an O-ring seal 171 for providing a fluid-tight seal between the piston and the valve body 172 and a groove receiving an O-ring seal 173 for providing a fluid-tight seal between the piston and the valve body 58. The O-ring seal 81 provides a fluid-tight seal between the piston 59 and the second valve body 172. The poppet valve 61 has a valve head 93 received in the control chamber portion 50 for sealing the inlet passage 51 (52) and a stem 86, which is longer than the stem in Fig. 1, extending through the bore 67 in the first valve body 58 to a fixed connection with the first piston 170, such as a threaded connection.

The second valve body 172 has a second piston receiving cavity 178 and a bore 180 extending to the second piston receiving cavity 178, in which the rod portion 176 of the first piston 170extends through the bore 180, and the second piston 59 is movably received in the second piston receiving cavity 178. The second piston 59 has a fixed connection with the rod portion 176 of the first piston 170, such as a threaded connection. Accordingly, the first and second pistons 170 and 59 may be connected in tandem and axially aligned.

Also received in the second piston receiving cavity 178 is the resilient member 82, which may be any suitable member such as a compression spring. An upper surface of the base 80 of the second piston 59 provides a spring stop for resilient member 82. The resilient member 82 is located between the base 80 and the respective cover 38, 39 and normally urges the pistons 59 and 170 downwardly toward the base of the respective valve bodies, thereby urging the poppet valve 61 to a normally closed position where the valve head 93 seals the inlet passage 51 (52). The first and second pistons 170 and 59 are axially movable against the biasing force by fluid from the actuation passage 57 acting on undersides of the respective pistons 170 and 59 to move the valve head 93 of the poppet valve 61 from the normally closed position to a normally open position where fluid flows from the inlet passage 51 into the control chamber portion 50 to the outlet passage 53. The fluid then flows through the common passage 30 to the inlet 52. When the poppet valve 61 is in the normally closed position, fluid in the control cavity portion 50 vents to the vent chamber portion 49 and through vent passage 55 (56). The vented fluid then flows through the vent passage 27 (29) in the base plate 25, which exhaust the fluid (typically to atmosphere).

To move the valve head 93 to the open position, the fluid from the actuation passage 57 flows through one or more radial passages 68 in the first valve body 58 to an actuation chamber 184 defined between the underside of the first piston 170 and the first valve body 58 in the actuation chamber portion 48. The fluid in the actuation chamber 184 thereby acts on the underside of the first piston 170 to move the first piston 170 against the biasing force when the pressure of the actuation fluid exceeds the biasing force. The fluid also flows from the actuation chamber 184 to a piston passage 186 in the first piston 170. The fluid flows through the piston passage 186 to a chamber 188 defined between the underside of the second piston 59 and the second valve body 172. The piston passage 186 may be formed in any suitable manner, such as by an angled drill hole 190 extending from the underside of the first piston 170 to a bore 192 in the first piston 170, where a portion of the bore receives the stem 86 of the poppet valve 61. The fluid flows from the piston passage 186 through the bore 192 to the chamber 188 through one or more radial passages 194 in the first piston 170 that communicate with the piston passage 186 and chamber 188. The fluid in the chamber 188 thereby acts on the underside of the second piston 59 to move the second piston 59 against the biassing force when the pressure of the actuation fluid exceeds the biassing force.

While it is described above that passage 51 is an inlet passage and passage 53 is an outlet passage for valve assembly 36, and passage 52 is an inlet passage and passage 54 is an outlet passage for valve assembly 37, the inlet and outlet passages could be reversed, such that sample fluid is provided into passage 54 and out of passage 52 of valve assembly 37 and then into passage 53 and out of passage 51 of valve assembly 36. This can be accomplished by switching the fluid lines into base plate 24, or alternatively reconfiguring the passages 26, 27 and 30 in the base plate.

By including the first and second pistons 170 and 59 in the configuration shown in Fig. 3, the valve module 22 increases the effective area the actuation air pressure acts on, such as doubles the effective area, without increasing the diameter of the pistons, thereby not increasing the size of the module 22. The stream selector 20 also operates essentially the same as the stream selector of Fig. 1, but at substantially lower actuation air pressures, such as approximately half the actuation air pressure used in Fig. 1, because the effective area that the actuation air pressure acts on is increased. In this way, the stream selector 20 allows for the same functionality as the stream selector in Fig. 1 at reduced air pressures, while also being backwards compatible with the stream selector in Fig. 1.

Referring again to the valve assemblies 36 and 37, the valve assemblies 36 and 37 also include a bonnet 60 received in the vent chamber portion 49 of the valve receiving cavities 34, 35 and a spacer body 196 received in the spacer chamber portion 47 of the cavities 34, 35. The bonnet 60 includes a bore 74 extending through the body that fluidly connects to the vent passage 55 (56), in which the stem 86 of the poppet valve 61extends through the bore 74, and one or more radial passages 76 that fluidly connect the vent passage 55 (56) to the control cavity portion 50. When the poppet valve 61 is in the closed position, fluid in the control cavity portion 50 vents through the bore 74 in the bonnet 60 through the radial passages 76 to the vent passage 55 (56). The spacer body 196 includes a bore 198 extending through the body 196, in which the stem 86 of the poppet valve 61extends through the bore 198, and the bore receives suitable packing 200. The spacer body 196 also includes one or more radial passages 202 connected to the side vent passage 46. An O-ring seal 203 is received in a groove in the spacer body 196 and provides a fluid-tight seal between the spacer body and the module body 33.

A first valve seat 104 is defined in the module body 33 for seating the valve head 93 when the poppet valve 61 is in the closed position and a second valve seat 105 is defined by an inner end of the bore 74 in the bonnet 60 for seating the valve head 93 when the poppet valve 61 is in the open position. The poppet valve 61 may include first and second resilient valve sealing members 99 and 98 configured to be seated against the first and second valve seats 104 and 105, respectively. An intermediate mode may also occur, where the resilient valve sealing members are each spaced a short distance from their respective valve seats 104, 105. A complete purge of fluid may occur from the module in this condition.

To allow fluid such as air in the actuation cavity portion 48 between a topside of the first piston 170 and a bottom of the second valve body 172 to be vented to atmosphere, the second valve body 172 includes a passage defined by an annular groove 210 and one or more radial passages 212 extending outward from the groove 210. Similarly, to allow fluid in the piston receiving cavity 178 between a topside of the second piston 59 and the covers 38, 39 to be vented to atmosphere, the covers 38, 39 include an opening 214 that defines with an outer surface of the second piston 59 a passage.

The valve module 20 has first and second configurations operable at relatively high and relatively low actuation pressures, respectively. The valve module 20 in the first configuration includes the piston 59 received in the piston receiving cavity 65 of the first valve body 58, the piston 59 being responsive to the relatively high actuation air pressure for effecting closing and opening of a poppet valve 61 coupled to the piston 59. The valve module 20 in the second configuration includes the second valve body 172 and the piston 170 connected in tandem with the piston 59, the pistons 170 and 59 being response to the relatively low actuation air pressure for effecting closing and opening of the poppet 61. In the second configuration, the piston 170 is received in the piston receiving cavity 65 of the first valve body 58 and the piston 59 is received in the piston receiving cavity 178 of the second valve body 172.

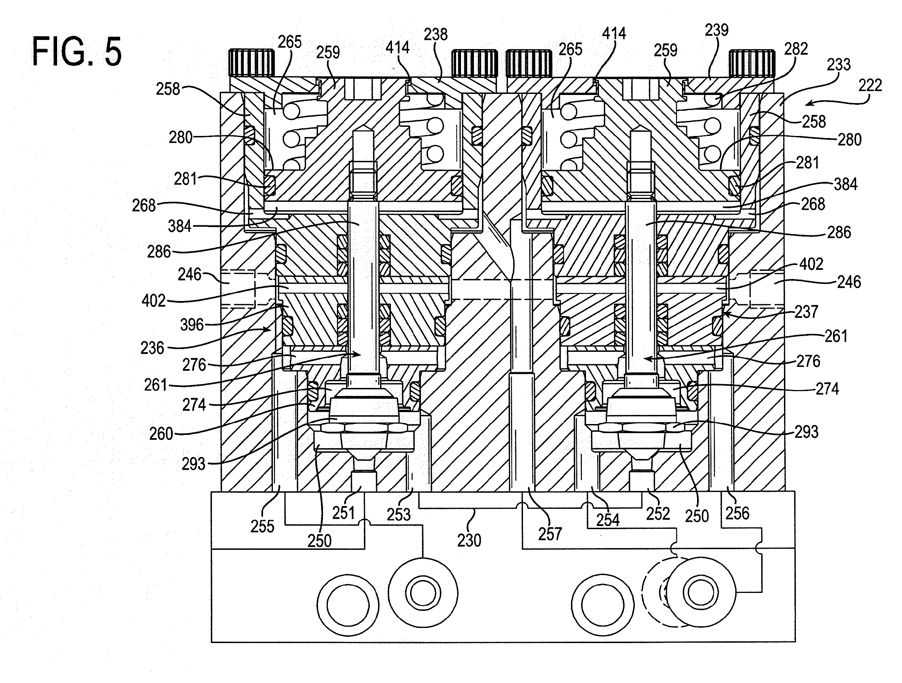

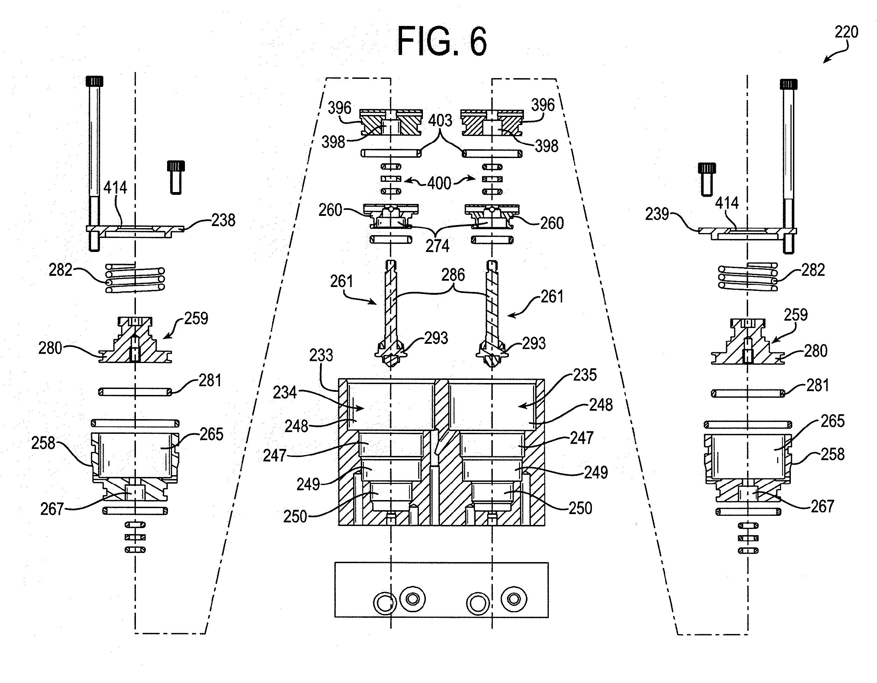

Turning now to Figs. 5 and 6, an exemplary embodiment of the stream selector is shown at 220. The stream selector 220 is substantially the same as the above-referenced stream selector 20 shown in Figs. 3 and 4, and consequently the same reference numerals but indexed by 200 are used to denote structures corresponding to similar structures in the stream selectors. In addition, the foregoing description of the stream selector 20 is equally applicable to the stream selector 220 except as noted below.

The stream selector 220 includes a valve module 222 that includes a module body 233 having a pair of valve receiving cavities 234, 235, which may be identical, and valve assemblies 236 and 237 received in the cavities 234 and 235, respectively. The module body 233 has inlet passages 251, 252, outlet passages 253, 254, vent passages 255, 256 and a common actuation passage 257. The valve receiving cavity 234 defines a control chamber portion 250 in communication with the inlet and outlet passages 251 and 253, a spacer chamber portion 247 in communication with a side vent passage 246, a vent chamber portion 249 in communication with the vent passages 255, and an actuation chamber portion 248 in communication with the actuation passage 257. The valve receiving cavity 235 similarly defines a control chamber portion 250 in communication with the inlet and outlet passages 252 and 254, a spacer chamber portion 247 in communication with the side vent passage 246, a vent chamber portion 249 in communication with the vent passage 256, and an actuation chamber portion 248 in communication with the actuation passage 257.

The valve assemblies 236 and 237 each include a valve body 258, a poppet valve 261, a piston 259, and a resilient member 282. The valve body 258 has a piston receiving cavity 265 and a bore 267 extending to the first piston receiving cavity 265. The poppet valve 261 has a valve head 293 received in the control chamber portion 250 for sealing the inlet passage 251 (252) and a stem 286 extending through the bore 267 in the valve body 258 to a fixed connection with the piston 259, such as a threaded connection.

The piston 259 is received in the piston receiving cavity 259 and an O-ring seal 281 is provided that provides a fluid-tight seal between the piston 259 and the valve body 258. Also received in the piston receiving cavity 265 is the resilient member 282, which may be any suitable member such as a compression spring. An upper surface of the base 280 of the piston 259 provides a spring stop for resilient member 282. The resilient member 282 is located between the base 280 and the respective cover 238, 239 and normally urges the piston 259 downwardly toward the base of the respective valve bodies, thereby urging the poppet valve 261 to a normally closed position where the valve head 293 seals the inlet passage 251 (252). The piston 259 is axially movable against the biasing force by fluid from the actuation passage 257 acting on an undersides of the pistons 259 to move the valve head 293 of the poppet valve 261 from the normally closed position to a normally open position where fluid flows from the inlet passage 251 into the control chamber portion 250 to the outlet passage 253. The fluid then flows through the common passage 230 to the inlet 252. When the poppet valve 261 is in the normally closed position, fluid in the control cavity portion 250 vents to the vent chamber portion 249 and through vent passage 255 (256).

To move the valve head 293 to the open position, the fluid from the actuation passage 257 flows through one or more radial passages 268 in the valve body 258 to an actuation chamber 384 defined between the underside of the piston 259 and the valve body 258 in the actuation chamber portion 248. The fluid in the actuation chamber 384 thereby acts on the underside of the piston 259 to move the piston 259 against the biasing force when the pressure of the actuation fluid exceeds the biassing force.

Referring again to the valve assemblies 236 and 237, the valve assemblies 236 and 237 also include a bonnet 260 received in the vent chamber portion 249 of the valve receiving cavities 234, 235 and a spacer body 396 received in the spacer chamber portion 247 of the cavities 234, 235. The bonnet 260 includes a bore 274 extending through the body that fluidly connects to the vent passage 255 (256), in which the stem 286 of the poppet valve 261 extends through the bore 274. The bonnet 260 also includes one or more radial passages 276 that fluidly connect the vent passage 255 (256) to the control cavity portion 250. When the poppet valve 261 is in the closed position, fluid in the control cavity portion 250 vents through the bore 274 in the bonnet 260 through the radial passages 276 to the vent passage 255 (256). The spacer body 396 includes a bore 398 extending through the body 396, in which the stem 286 of the poppet valve 261 extends through the bore 398 and the bore receives suitable packing 400. The spacer body 396 also includes one or more radial passages 402 connected to the side vent passage 246. An O-ring seal 403 is received in a groove in the spacer body 396 and provides a fluid-tight seal between the spacer body and the module body 233.

To allow fluid in the piston receiving cavity 265 between a topside of the piston 259 and the covers 238, 239 to be vented to atmosphere, the covers 238, 239 include an opening 414 which, with an outer surface of the second piston 259, defines a passage.

## Claims

1. A valve module for a stream selector, the valve module including:
(a) a module body having an inlet passage, an outlet passage, a vent passage, an actuation passage, and a valve receiving cavity defining a control chamber portion in communication with the inlet and outlet passages, a vent chamber portion in communication with the vent passage, and an actuation chamber portion in communication with the actuation passage, and
(b) a valve assembly received in the valve receiving cavity of the module body, the valve assembly including:
a first valve body having a first piston receiving cavity and a bore extending to the first piston receiving cavity,
a first piston having a base portion movably received in the first piston receiving cavity and a rod portion,
a poppet valve having a valve head received in the control chamber portion for sealing the inlet passage and a stem extending through the bore in the first valve body to a fixed connection with the first piston,
a second valve body having a second piston receiving cavity and a bore extending to the second piston receiving cavity, in which the rod portion of the first piston bore extends through the bore,
a second piston movably received in the second piston receiving cavity, the second piston having a fixed connection with the rod portion of the first piston, and
a resilient member providing a biasing force that urges the poppet valve to a closed position where the valve head seals the inlet passage,
in which the first and second pistons are axially movable against the biasing force by fluid from the actuation passage acting on undersides of the respective pistons to move the valve head from the closed position to an open position where fluid flows from the inlet passage into the control chamber portion to the outlet passage.

2. The valve module according to claim 1, in which the first piston has a piston passage that communicates with a chamber defined between the underside of the second piston and the second valve body, in which the piston passage is configured to deliver fluid from an actuation chamber defined between the underside of the first piston and the first valve body in the actuation chamber portion to the chamber in the second valve assembly.

3. The valve module according to claim 2, in which the first piston includes one or more radial passages that receive the fluid from the piston passage and that deliver the fluid to the chamber between the underside of the second piston and the second valve body.

4. The valve module according to any preceding claim, in which the first valve body includes one or more radial passages that fluidly connect the actuation passage to the actuation chamber.

5. The valve module according to any preceding claim, in which the valve body is received in the actuation chamber portion of the valve receiving cavity.

6. The valve module according to any preceding claim, further including a bonnet received in the vent chamber portion of the valve receiving cavity, the bonnet including a bore fluidly connected to the vent passage, in which the stem of the poppet valve extends through the bore.

7. The valve module according to claim 6, in which the bonnet includes one or more radial passages that fluidly connect the vent passage and the control cavity portion.

8. The valve module according to claim 6 or claim 7, in which the module body defines a first valve seat for the valve head when the poppet is in the closed position and an end of the bore defines a second valve seat for the valve head of the poppet when the poppet is in the open position, and in which the poppet valve includes first and second resilient valve sealing members configured to be seated against the first and second valve seats, respectively.

9. The valve module according to any preceding claim, in which the first and second pistons are axially aligned.

10. The valve module according to any preceding claim, in which the module body has a side passage, the valve receiving cavity defining a spacer chamber portion in communication with the side passage, and in which the spacer chamber portion is located between the vent chamber portion and the actuation chamber portion.

11. The valve module according to claim 10, further including a spacer body received in the spacer chamber portion, the spacer body including a bore extending through the body, in which the stem of the poppet valve extends through the bore.

12. The valve module according to claim 11, in which the spacer body includes one or more radial passages connected to the side passage.

13. The valve module according to any preceding claim, in which the second valve body includes a passage defined by an annular groove and one or more radial passages extending outward from the groove to allow fluid in the actuation cavity portion between a topside of the first piston and a bottom of the second valve body to be vented to atmosphere.

14. The valve module according to any preceding claim, further including a cover, the resilient member being located between a base of the second piston and the cover to urge the second piston downward to urge the poppet valve to the closed position, and in which the cover includes an opening that defines with an outer surface of the second piston a passage to allow fluid in the second piston receiving cavity between a topside of the second piston and the cover to be vented to atmosphere.

15. A method of assembling a valve module having first and second configurations operable at relatively high and relatively low actuation pressures, respectively, the valve module in the first configuration having a first piston responsive to the relatively high actuation pressure for effecting closing and opening of a poppet coupled to the piston, and a first valve body for receiving the first piston, and the valve module in the second configuration having a second valve body and a second piston connected in tandem with the first piston, in which the first and second pistons are response to the relatively low actuation pressure for effecting closing and opening of the poppet, and in which the first valve body receives the second piston and the second valve body receives the first piston.
